# EUROPÄISCHE PATENTSCHRIFT

(11) **EP 1 516 127 B1**
(45) Veröffentlichungstag und Bekanntmachung des Hinweises auf die Patenterteilung: **14.06.2006**
(21) Anmeldenummer: 03727480.0
(22) Anmeldetag: 15.05.2003
(51) Int. Cl.: F16C 29/06

(54) **LINEARWÄLZLAGER**
LINEAR ROLLER BEARING
PALIER A ROULEMENT LINEAIRE

(30) Priorität: 21.06.2002 DE 10227714
(43) Veröffentlichungstag der Anmeldung: 23.03.2005
(73) Patentinhaber: Schaeffler KG, 91074 Herzogenaurach (DE)
(72) Erfinder: MENGES, Martin, 66424 Homburg (DE); ELICKER, Thomas, 66564 Ottweiler (DE)
(86) Internationale Anmeldenummer: PCT/EP2003/005088
(87) Internationale Veröffentlichungsnummer: WO 2004/001243

(56) Entgegenhaltungen:
- EP-A- 0 838 602
- CH-A- 675 011
- US-A- 5 672 011
- US-B1- 6 203 199

## Beschreibung

### Gebiet der Erfindung

Die vorliegenden Erfindung betrifft Linearwälzlager wie sie beispielsweise in Linearführungen von Werkzeugmaschinen zum Einsatz kommen. Die vorliegende Erfindung betrifft insbesondere solche Linearwälzlager, bei denen sowohl Kräfte quer zur Führungsrichtung als auch Drehmomente über das Linearwälzlager übertragen werden.

Aus DE 41 39 026 A1 beispielsweise ist ein Linearwälzlager mit einem an einer Führungsschiene über Rollen wälzlagerbaren Führungswagen bekannt geworden. Der Führungswagen ist mit wenigstens einem endlosen Rollenkanal für Rollen versehen. Der Rollenkanal umfasst einen Tragkanal für tragende Rollen, einen Rücklaufkanal für rücklaufende Rollen, und zwei den Tragkanal und den Rücklaufkanal miteinander verbindende Umlenkkanäle auf. Der Führungswagen umfasst einen den Rücklaufkanal und den Tragkanal aufweisenden Tragkörper und an beiden Stirnseiten des Tragkörpers angeordnete, die Umlenkkanäle aufweisende Endglieder. Der Rücklaufkanal umfasst ein Rücklaufrohr, dessen Rohrenden mit den Endgliedern verbunden sind. Der Rollenkanal weist Laufbahnen für die Rollen und Seitenflächen zur seitlichen Begrenzung des Rollenkanals auf. Das Rücklaufrohr ist zylindrisch ausgeführt, hat eine langgestreckte Form und an jedem Ende eine profilierte Endfläche. Die Enden oder Mündungen der Umlenkkanäle in den Endgliedern haben jeweils eine komplementäre profilierte Struktur, so dass sich eine zusammenpassende oder ineinander greifende Verbindung zwischen jeweils einer profilierten Endfläche des Rücklaufrohres oder der zugehörigen, komplementär profilierten Mündung des gebogenen Umlenkkanals ergibt. Das aus mehreren Längsteilen zusammengesetzte Rücklaufrohr hat keine ebene Stirnfläche, sondern weist eine profilierte Passungskonfiguration auf. Die eine Hälfte des Rücklaufrohres weist an ihren. Enden Vorsprünge auf, die in Längsrichtung vorspringen und einen zurückgesetzten Abschnitt haben, der durch eine horizontale Seitenwand des Vorsprunges und durch eine vertikale Stirnfläche begrenzt ist. Die Vorsprünge der komplementären Hälften des Rücklaufrohres ergeben im zusammengesetzten Zustand eine halbmondförmige oder kreissegmentförmige Struktur. Der zurückgesetzte Abschnitt des Rücklaufrohres kommt in Deckung mit einem entsprechenden Vorsprung des Endgliedes 4, so dass eine Positionierung des Rücklaufrohres und des Endgliedes in Bezug aufeinander gewährleistet ist. Die Vorsprünge und die zurückgesetzten Abschnitte sollen so geformt sein, dass eine freie Drehung der Rücklaufrohre in den Durchgangsbohrungen verhindert ist.

Dort wo der Umlenkkanal und der Rücklaufkanal zusammentreffen, ist eine Trennfuge gebildet, die im Wesentlichen quer zum längserstreckten Rücklaufrohr angeordnet ist. Bei groß bauenden Baureihen von derartigen Linearwälzlagern kann es aufgrund ungünstiger Toleranzlagen zu einer deutlich vergrößerten Trennfuge kommen. Die Rollen können dann während ihres Umlaufs durch den Rollenkanal an Kanten des Rücklaufrohres und/oder des Endgliedes anschlagen, wobei diese Kanten an der Trennfuge gebildet sind. Es kommt zu störenden Laufgeräuschen, und möglicherweise zu Schäden, die bis zum Versagensfall des Linearwälzlagers führen können.

Aufgabe der vorliegenden Erfindung ist es daher, ein Linearwälzlager nach den Merkmalen des Oberbegriffs des Anspruchs 1 anzugeben, bei dem dieser Nachteil behoben ist.

Erfindungsgemäß wird diese Aufgabe dadurch gelöst, dass das Rücklaufrohr mit Zungen versehen ist, die in das Endglied eingreifen und mit einander zugewandten Zungenflächen Seitenflächen des Umlenkkanals bilden, wobei eine Trennfuge zwischen jeder Zunge und dem Endglied zumindest im Wesentlichen parallel zu dem Rücklaufrohr angeordnet ist. Bei dem erfindungsgemäßen Wälzlager sind ungünstige Toleranzlagen bei der Länge der Rücklaufrohre bzw. der Zungen unerheblich und haben keinen Einfluss auf die Größe der Trennfuge. Insbesondere bei großen Baureihen mit sehr langen Rücklaufrohren kann es zu größeren Toleranzschwankungen kommen, die bei den bekannten Linearwälziagem zu einer Vergrößerung der quer liegenden Trennfuge führen. Die erfindungsgemäß parallel zum Rücklaufrohr angeordnete Trennfuge ist demgegenüber unabhängig von Toleranzschwankungen in Längsrichtung.

Das Endglied kann mit einer konkav gekrümmten äußeren Laufbahn für die Rollen versehen sein, wobei die Zungen eine Ebene durchstoßen, in der die konkav gekrümmte äußere Laufbahn liegt. Bei dieser erfindungsgemäßen Weiterbildung muss lediglich darauf geachtet werden, dass die Zungen zumindest so lang sind, dass das freie Ende der Zunge die Ebene durchstößt, in der die konkav gekrümmte äußere Laufbahn liegt. In diesem Fall ist sichergestellt, dass das freie Ende jedenfalls nicht im Rollenkanal angeordnet ist. Toleranzschwankungen in Längsrichtung haben demzufolge keinen Einfluß auf die Ausbildung des Umlenkkanals und die Trennfuge. Die parallel zu dem Rücklaufrohr angeordnete Trennfuge ermöglicht zudem ein problemloses Einstekken der Rücklaufrohre in die Endglieder. Das Endglied ist vorzugsweise mit Aufnahmen für die Zungen versehen, wobei die Aufnahmen so angeordnet sind, dass das Rücklaufrohr einwandfrei ausgerichtet ist wenn es in das Endglied eingesteckt ist. Diese einwandfreie Ausrichtung ist erforderlich, um die richtige Drehlage des Rücklaufrohres zum Rücklaufkanal sicherzustellen. Anderenfalls könnte es zu einem Verkanten der Rollen kommen, wenn diese aus dem Umlenkkanal heraus und in den Rücklaufkanal hineinrollen.

Bei einer erfindungsgmäßen Weiterbildung ist das Endglied mit Seitenteilen versehen, deren einander zugewandte Endgliedflächen gemeinsam mit den einander zugewandten Zungenflächen die Seitenflächen des Umlenkkanals bilden, wobei zwischen den Seitenteilen die konkav gekrümmte äußere Laufbahn des Umlenkkanals angeordnet ist. Hier ist es besonders vorteilhaft, wenn eine Positioniereinrichtung vorgesehen ist, mittels der die Zungen mit ihren einander zugewandten Zungenflächen in einer gemeinsamen Ebene mit den einander zugewandten Endgliedflächen gehalten sind. Auf diese Weise ist eine glatte Seitenfläche im Umlenkkanal gebildet, so dass ein Verkanten der Rollen ausgeschlossen ist. Bei dieser erfindungsgemäßen Weiterbildung ist die Trennfuge von der Zunge und dem Seitenteil begrenzt, wobei auch hier die Trennfuge parallel zu dem Rücklaufrohr angeordnet ist.

Das Endglied kann ein an dem Tragkörper gehaltenes Kopfstück und eine in dem Kopfstück angeordnete Umlenkschale aufweisen, wobei die Umlenkschale die oben genannte konkav gekrümmte äußere Laufbahn für die Rollen aufweist.

Die Umlenkschale kann auch vorzugsweise mit den Seitenteilen versehen sein, wobei die Seitenteile mit die Aufnahmen für die Zungen bildende Öffnungen versehen sind. Wenn die Zungen in die Aufnahmen der Seitenteile eingeführt sind, sind die Seitenteile und die Rücklaufrohre einwandfrei zueinander ausgerichtet, so dass der Umlenkkanal und der Rücklaufkanal einwandfrei miteinander korrespondieren und einen einwandfreien Umlauf der Rollen gewährleisten.

Nachstehend wird die Erfindung anhand eines in insgesamt dreizehn Figuren abgebildeten Ausführungsbeispiels näher erläutert. Es zeigen:
- Figur 1: einen Querschnitt durch ein erfindungsgemäßes Linearwälzlager,
- Figur 2: als Einzelheit ein Rücklaufrohr des erfindungsgemäßen Linearwälzlagers in perspektivischer Darstellung,
- Figur 3: eine Hälfte des Rücklaufrohres aus Figur 2,
- Figur 4: einen teilweisen Längsschnitt durch das erfindungsgemäße Linearwälzlager aus Figur 1,
- Figur 5: in perspektivischer Darstellung einen Teil des Rücklaufrohres und einen Teil des Endgliedes des Linearwälzlagers aus Figur 1,
- Figur 6: das mit dem Endglied verbundene Rücklaufrohr in vereinfachter Darstellung,
- Figur 7: in perspektivischer Darstellung teilweise das Endglied und das Rücklaufrohr,
- Figur 8: eine weitere perspektivische Darstellung des Endgliedes,
- Figur 9: die im Endglied angeordnete Zunge des Rücklaufrohres in vereinfachter Darstellung,
- Figur 10: einen Schnitt entlang der Linie X-X in Figur 9,
- Figur 11: in perspektivischer Darstellung den mittleren Rückhaltesteg als Einzelteil,
- Figur 12: eine Hälfte des mittleren Rückhaltestegs in perspektivischer Darstellung,
- Figur 13: einen Schnitt durch den mittleren Rückhaltesteg in vereinfachter Darstellung entlang der Linie XIII-XIII in Figur 11.
- Figur 14: einen modifizierten mittleren Rückhaltesteg in perspektivischer Darstellung,
- Figur 15: die im Endglied angeordnete Zunge des mittleren Rückhaltestegs aus Figur 14 in vereinfachter Darstellung und
- Figur 16: den im Endglied angeordneten mittleren Rückhaltesteg im Längsschnitt in schematischer Darstellung.

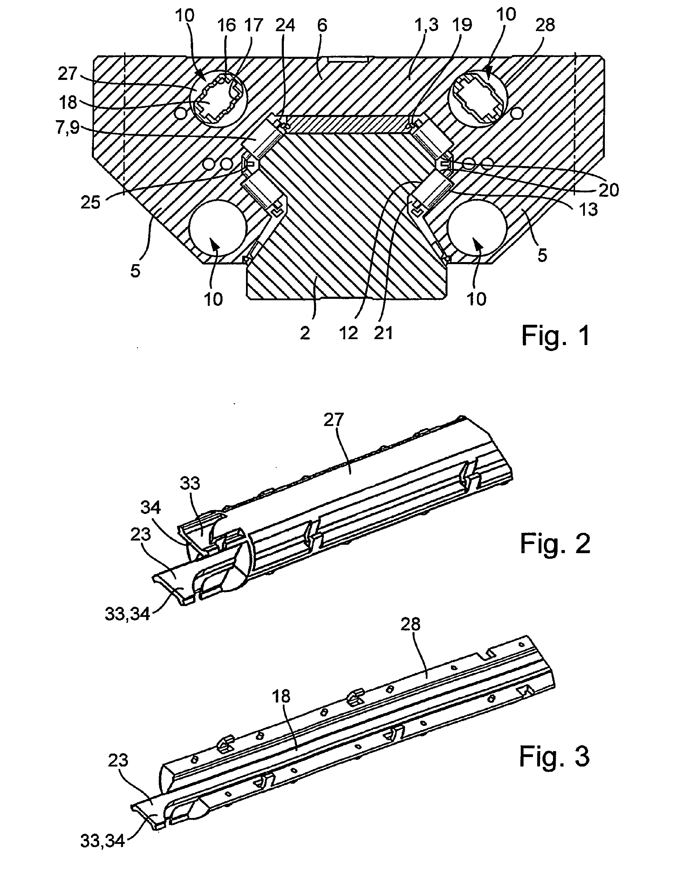

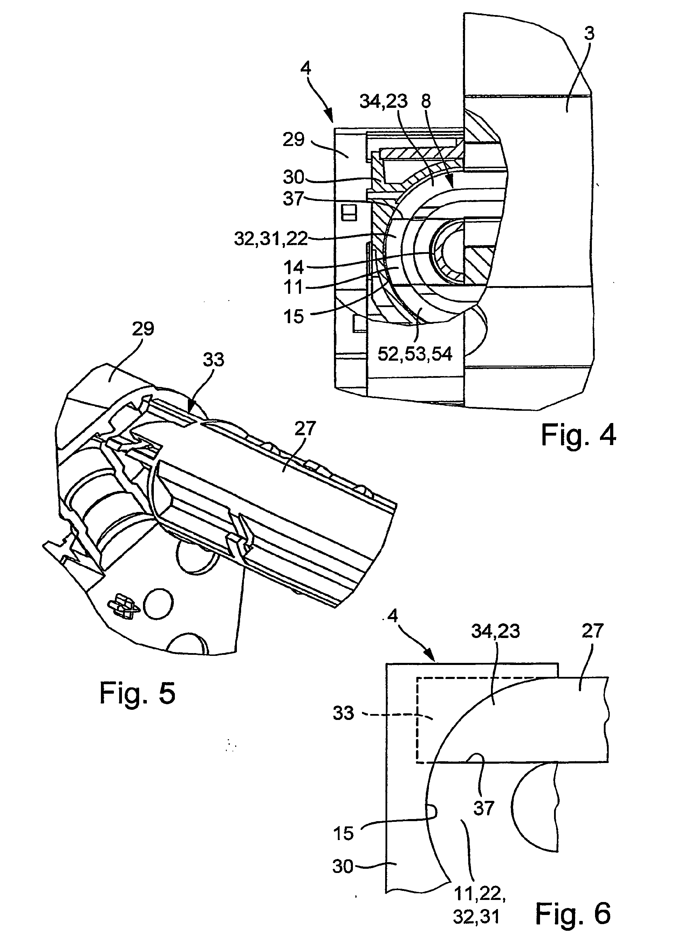

Figur 1 zeigt im Querschnitt eine erfindungsgemäße Linearführung mit einem Führungswagen 1, der auf einer Führungsschiene 2 wälzgelagert ist. Der Führungswagen 1 umfasst einen Tragkörper 3 und Endglieder 4 (siehe Figur 4) wobei die Endglieder 4 an beiden Stirnseiten des Tragkörpers 3 befestigt sind. Der Tragkörper 3 weist zwei Führungsschenkel 5 und einen diese beiden Führungsschenkel 5 einstückig miteinander verbindenden Verbindungssteg 6 auf, und zwar in der Weise, dass ein u-förmiger Tragkörper gebildet ist. Der Führungswagen 1 ist über Rollen 7 an der Führungsschiene 2 längsbeweglich gelagert. Die Rollen 7 sind in Rollenkanälen 8 angeordnet. Jeder Rollenkanal 8 umfasst einen Tragkanal 9 für tragende Rollen 7, einen Rücklaufkanal 10 für rücklaufende Rollen 7, und zwei den Tragkanal 9 und den Rücklaufkanal 10 miteinander verbindende Umlenkkanäle 11. Der Rollenkanal 8 weist Laufbahnen 12, 13, 14, 15, 16, 17 für die Rollen 7 auf. Die Laufbahnen 12 sind an der Führungsschiene 2 ausgebildet. An jeder Längsseite der Führungsschiene 2 sind zwei dieser Laufbahnen 12 in einem Winkel von etwa 90° zueinander angeordnet. Korrespondierende Laufbahnen 13 sind an den beiden Führungsschenkein 5 des Tragkörpers 3 ausgebildet. Bei dieser Anordnung der Rollen 7 können über den Führungswagen sowohl Kräfte quer zur Führungsschiene 2 als auch Drehmomente übertragen werden. Im Umlenkkanal 11 ist eine konkav gekrümmte äußere Laufbahn 15 und eine konvex gekrümmte innere Laufbahn 14 für die Rollen 7 ausgebildet. Im Rücklaufkanal 10 sind an einander gegenüberliegenden Seiten Laufbahnen 16 und 17 für die Rollen 7 ausgebildet. Ferner umfasst der Rollenkanal 8 Seitenflächen 18, 19, 20, 21, 22, 23, 54 zur seitlichen Begrenzung des Rollenkanals 8 auf. Im Rücklaufkanal 10 sind an einander gegenüberliegende Seiten die Seitenflächen 18 ausgebildet. Im Umlenkkanal 11 sind die Seitenflächen 22, 23, 54 ausgebildet. Im Tragkanal 9 sind die Seitenflächen 19, 20, 21 ausgebildet.

Im Tragkanal 9 sind zu beiden Stirnseiten der Rollen 7 Rückhaltestege 24, 25, 26 angeordnet, die nachstehend unterschieden werden in einen oberen Rückhaltesteg 24, einen mittleren Rückhaltesteg 25 und in einen unteren Rückhaltesteg 26. Die Seitenfläche 19 ist an dem oberen. Rückhaltesteg 24 ausgebildet, die Seitenfläche 20 ist an dem mittleren Rückhaltesteg 25 an einer Seite ausgebildet, die dem oberen Rückhaltesteg 24 zugewandt ist. Die Seitenfläche 21 ist an dem unteren Rückhaltesteg 26 ausgebildet und eine weitere Seitenfläche ist an dem mittleren Rückhaltesteg 25 ausgebildet, und zwar an der Seite, die dem unteren Rückhaltesteg 21 zugewandt ist. Die Rückhaltestege 24, 25, 26 umgreifen die Rollen 7 derart, dass diese verliersicher an dem Führungswagen 1 gehalten sind. Dies ist insbesondere dann zweckmäßig, wenn der Führungswagen 1 von der Führungsschiene 2 weggenommen wird.

Ein Rücklaufrohr 27 ist vorgesehen, das eine im Wesentlichen glatte äußere Zylinderfläche aufweist, wobei im inneren des Rücklaufrohres 27 eine Kontur zur Bildung des Rücklaufkanals 10 ausgebildet ist. Der Tragkörper 3 weist insgesamt vier Durchgangsbohrungen 28 auf, in denen je ein Rücklaufrohr 27 eingesetzt ist.

Das Endglied 4 (Figur 4) umfasst ein Kopfstück 29, das an dem Tragkörper 3 befestigt ist. In dem Kopfstück 29 ist eine Umlenkschale 30 angeordnet, dessen Seitenteile 31 an ihren einander zugewandten Seiten mit Endgliedflächen 32 versehen sind, wobei die Endgliedflächen 32 die oben erwähnten Seitenflächen 22 des Umlenkkanals 11 bilden. Zwischen den beiden Seitenteilen 31 einer Umlenkschale 30 ist an der Umlenkschale 30 die äußere konkav gekrümmte Laufbahn 15 ausgebildet.

Die Figuren 2 und 3 zeigen das Rücklaufrohr 27. Das Rücklaufrohr 27 ist aus zwei identischen Längsteilen 28 zusammengesetzt. An beiden Enden des Rücklaufrohres 27 sind jeweils zwei Zungen 33 einstückig angeformt. Einander gegenüberliegende Zungenflächen 34 bilden die oben erwähnten Seitenflächen 23 des Umlenkkanals 11. Dies ist deutlich der Figur 4 zu entnehmen. Die Zungen 33 greifen dabei in das Endglied 4 ein. Figur 5 zeigt das Rücklaufrohr 27 und das Kopfstück 29, wobei das Rücklaufrohr 27 zum Kopfstück 29 hin so ausgerichtet ist, dass die Zungen 33 in das Kopfstück 29 eingeführt werden können.

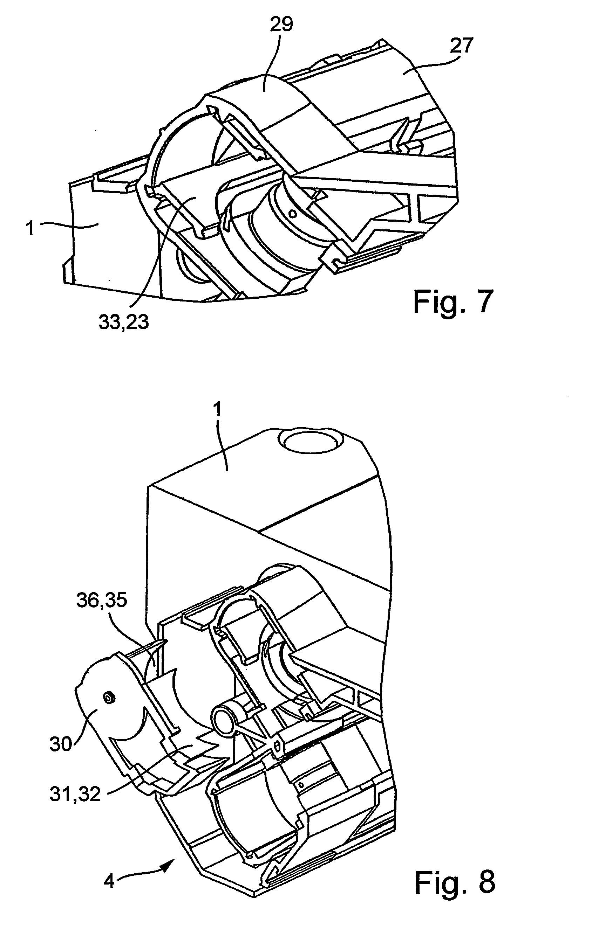

Figur 7 zeigt das Kopfstück 29 und das Rücklaufrohr 27 mit eingeführten Zungen 33.

Der Figur 8 ist zu entnehmen, dass die Umlenkschale 30 mit Öffnungen 35 versehen ist, die Aufnahmen 36 für die Zungen 33 des Rücklaufrohres 27 bliden.

Figur 6 zeigt skizzenhaft das in das Endglied 4 eingesteckte Rücklaufrohr 27. Andeutungsweise zeigt die Figur 6 die Umlenkschale 30 mit der konkav gekrümmten äußeren Laufbahn 15 und gestrichelt dargestellt eine der Zungen 33 des Rücklaufrohres 27. Die Zungen 34 durchstoßen eine Ebene, in der die konkav gekrümmte äußere Laufbahn 15 angeordnet ist. Das bedeutet, die freien Enden der Zungen 33 sind jenseits dieser Laufbahn 15 angeordnet. Der Figur 6 ist ferner zu entnehmen, dass eine Trennfuge 37 zwischen jeder Zunge 33 und dem Endglied 4 parallel zu dem Rücklaufrohr 27 angeordnet ist. Im konkreten Ausführungsbeispiel ist die Trennfuge 37 von der Zunge 33 und dem Seitenteil 31 der Umlenkschale 30 begrenzt.

Diese geschilderte Verbindung zwischen dem Rücklaufrohr 27 und dem Endglied 4 eignet sich insbesondere bei groß dimensionierten Baureihen. Bei bekannten Linearwälzlagern ist eine Trennfuge zwischen Rücklaufrohr und Endglied quer zur Längsachse des Rücklaufrohres angeordnet. In derartigen Fällen ist die Trennfuge durch das freie Zungenende begrenzt. Wenn bei derartigen bekannten Ausführungen aufgrund einer ungünstigen Toleranzlage das Rücklaufrohr etwas zu kurz gerät, kann die Trennfuge so groß werden, dass es zu unerwünschten Laufgeräuschen und anderen Störungen im Wälzkörperumlauf kommen kann. Bei dem erfindungsgemäßen Linearwälzlager sind derartige Toleranzschwankungen ohne Einfluß auf die Trennfuge, da diese in Längsrichtung zum Rücklaufrohr 27 verläuft. In jedem Fall ist sichergestellt, dass das freie Ende der Zunge 33 jenseits des Umlaufkanals 11 angeordnet ist.

Um sicherzustellen, dass die einander zugewandten Zungenflächen 34 in einer gemeinsamen Ebene mit den einander zugewandten Endgliedflächen 32 des Endgliedes 4 angeordnet sind - wobei die einander zugewandten Zungenflächen 34 und die einander zugewandten Endgliedflächen 32 die Seitenflächen 22 und 23 des Umlenkkanals 11 bilden -, ist eine Positioniereinrichtung 38 vorgesehen.

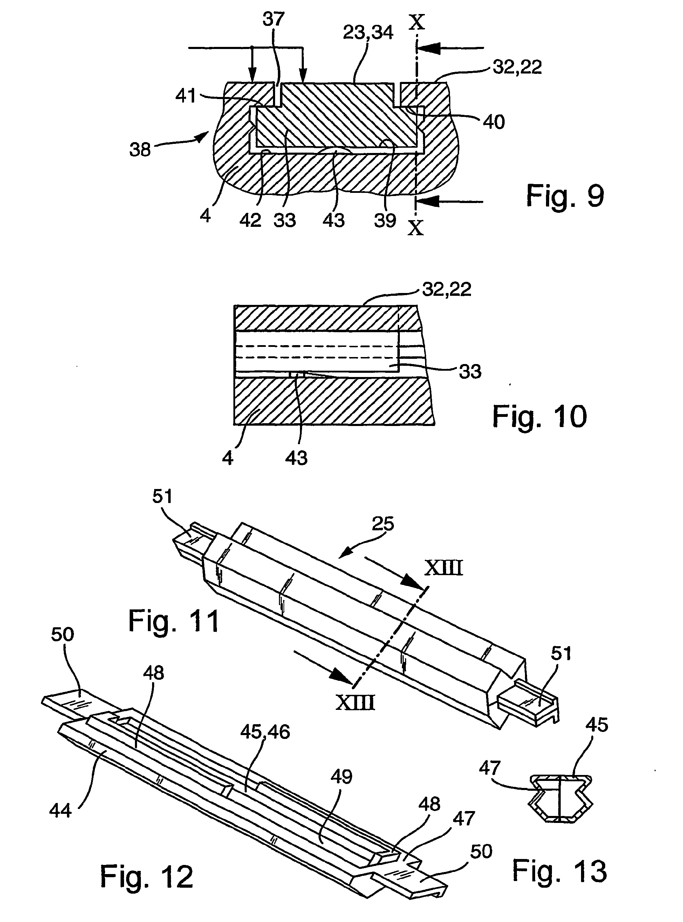

Figur 9 zeigt eine mögliche konkrete Ausbildung einer Positioniereinrichtung 38. In der konkreten Anordnung umfasst die Positioniereinnrichtung Stützabschnitte 39 die aneinander abgewandten Zungenseiten der Zungen 33 vorgesehen sind, ferner Positionierabschnitte 40 die aneinander zugewandten Zungenseiten vorgesehen sind, ferner Anschlagabschnitte 41, die an dem Endglied 4 vorgesehen sind, wobei die Positionierabschnitte 40 der Zungen 33 an die Anschlagabschnitte 41 des Endgliedes 4 anschlagen, ferner Lagerabschnitte 42, die an dem Endglied 4 vorgesehen sind, wobei die Stützabschnitte 39 der Zungen 33 an den Lagerabschnitten 42 des Endgliedes 4 abgestützt sind.

Vorliegend sind die Stützabschnitte 39 mittelbar über eine Quetschrippe 43 an dem Lagerabschnitt 42 des Endgliedes 4 abgestützt. Die Quetschrippe 43 ist vorliegend einstückig an das Endglied 4 angeformt. Die Quetschrippe 43 ist keilförmig ausgebildet, so dass während des Einschiebens der Zungen 33 diese zunehmend eingekeilt wird zwischen den Positionierabschnitten 41 des Endgliedes 4 und den Quetschrippen 43.

Der Abstand zwischen den Positionierabschnitten 40 der Zunge 33 und der Zungenfläche 34 einerseits und der Abstand zwischen den Anschlagabschnitten 41 des Endgliedes 4 und der Endgliedfläche 32 des Endgliedes 4 andererseits sind derart aufeinander abgestimmt, dass die Endgliedfläche 32 und die Zungenfläche 34 in einer gemeinsamen Ebene liegen. Somit ist sichergestellt, dass die Seitenflächen 22 und 23 des Umlenkkanals 11 in einer gemeinsamen Ebene liegen. Die Rollen 7 können nicht verkanten oder verhaken, sondern laufen vielmehr einwandfrei im Umlenkkanal 11 um. Bei der Herstellung der Seitenflächen 22 und 23 brauchen lediglich die oben erwähnten Abstände einwandfrei eingehalten zu werden. Toleranzschwankungen an anderen Stellen des Endgliedes 4 oder des Rücklaufrohres 27 haben keinen Einfluss auf die Lage der Zungenfläche 34 und der Endgliedfläche 32 zueinander.

Die Figuren 11 bis 13 zeigen den besonders ausgebildeten mittleren Rückhaltesteg 25. Der Rückhaltesteg 25 ist aus zwei identischen Längsteilen 44 gebildet. Die Zweiteilung ist insbesondere dann von Vorteil, wenn Rückhaltestege für große Baureihen vorzusehen sind. In derartigen Fällen können diese Rückhaltestege 200mm und länger ausgebildet sein und einen Querschnitt aufweisen, der 7mm und größer sein kann. Vorzugsweise sind derartige Rückhaltestege aus Kunststoff im Spritzverfahren hergestellt. Bei einteilig ausgeführten Rückhaltestegen kann es beim Abkühlen in der Spritzform zu einem unerwünschten ungleichmäßigen Erstarren der Kunststoffmasse kommen, so dass sich ein unerwünschter Verzug an dem Rückhaltesteg einstellt. Mit dem hier vorgeschlagenen zweiteilig - oder auch drei- oder vierteilig - ausgeführten Rückhaltesteg sind diese Nachteile behoben. Denn die Querschnitte in der Form des Werkzeugs können nun so ausgelegt sein, dass ein unerwünschter Verzug nicht eintritt. Vorzugsweise umschließen die beiden Längsteile 44 entlang ihrer Längserstreckung einen Hohlraum 45, so dass die Wanddicken über dessen Längserstreckung weitgehend konstant sind und jedenfalls so bemessen sind, dass ein einwandfreies Abkühlen ohne unerwünschten Verzug gewährleistet ist. Der Hohlraum ist gebildet durch Ausnehmungen 46, die an den Längsteilen 44 an deren einander zugewandten Teilungsseiten 47 vorgesehen sind. Insbesondere der Figur 12 ist zu entnehmen, dass die Längsteile 44 mit Stegen 48 versehen sind, wobei die Stege 48 beider Längsteile 44 zur Bildung einer Steckverbindung 49 ineinander greifen, um den Rückhaltesteg 25 zu bilden.

Wenn die beiden Längsteile 44 an ihren einander zugewandten Teilungsseiten 47 jeweils mit Vorsprüngen und Ausnehmungen versehen sind, sind je ein Vorsprung und eine Ausnehmung an jedem Längsteil symmetrisch zu einer Quermittellinie des Rückhaltestegs 25 angeordnet. Bei dieser symmetrischen Anordnung können die beiden Längsteile 44 identisch ausgebildet sein und problemlos zusammengesteckt werden.

Jedes Längsteil 44 weist an beiden Enden Teitzapfen 50 auf. Wenn die beiden Längsteile 44 zusammengefügt sind, bilden die zusammengesetzten Teilzapfen 50 jeweils einen Zapfen 51. Die Zapfen 51 werden in entsprechende Zapfenaufnahmen des Endgliedes 4 eingesteckt. Diese Zapfenausbildung und das Einstecken der Zapfen in Aufnahmen trägt zu einer einwandfreien Verbindung der beiden Längsteile des Rückhaltestegs bei.

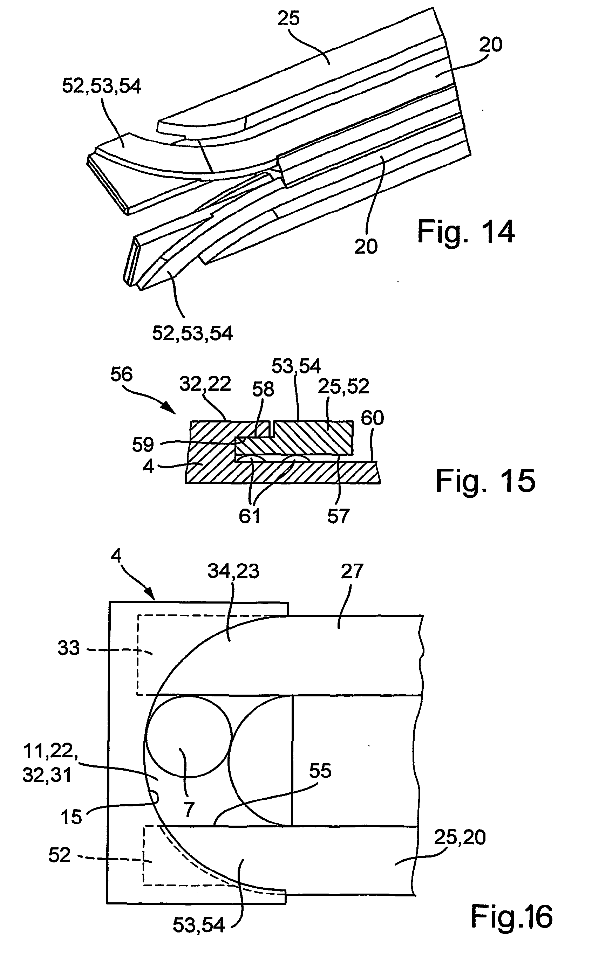

Figur 14 zeigt in perspektivischer Darstellung den mittleren Rückhaltesteg 25. An seinen Enden weist der Rückhaltesteg 25 Zungen 52 auf, deren Zungenfläche 53 jeweils eine Seitenfläche 54 des jeweiligen Umlenkkanals 11 bilden. Ebenso wie die Zungen 33 des Rücklaufrohres 27 durchstoßen die Zungen 52 die Ebene, in der die konkav gekrümmte äußere Laufbahn 15 des Endgliedes 4 angeordnet ist. Das bedeutet, die freien Enden der Zungen 52 sind jenseits dieser Laufbahn 15 angeordnet. Auch hier ist eine Trennfuge 55 zwischen jeder Zugen 52 und dem Endglied 4 parallel zu dem Rückhaltesteg 25 angeordnet. In konkreten Ausführungsbeispiel ist die Trennfuge 55 von der Zunge 52 und dem Seitenteil 31 der Umlenkschale 30 begrenzt. Auch hier tritt der erfindungsgemäße Vorteil ein, das Toleranzschwankungen in der Länge des Rückhaltestegs 25 keinen Einfluß auf die Breite der Trennfuge 55 haben. Demzufolge können die Rollen 7 einwandfrei mit ihren Stirnseiten den Umlenkkanal 11 passieren.

Um sicherzustellen, dass die Zungenflächen 53 in einer gemeinsamen Ebene mit den Endgliedflächen 32 angeordnet sind, - wobei die Zungenflächen 53 und die Endgliedflächen 32 die Seitenflächen 54 und 22 des Umlenkkanals 11 bilden -, ist eine weitere Positioniereinrichtung 56 vorgesehen.

Figur 15 zeigt in schematischer Darstellung die Anordnung der Zunge 52 des Rückhaltestegs 25 im Endglied 4 mit der Positioniereinrichtung 56. Diese Positioniereinrichtung 56 umfasst einen Stützabschnitt 57, der an der von der Zungenfläche 53 abgewandten Zungenseite der Zunge 52 vorgesehen ist, ferner einen Positionierabschnitt 58, der an der die Zungenfläche 53 aufweisenden Zungenseite der Zunge 52 vorgesehen ist, ferner einen Anschlagabschnitt 59, der an dem Endglied 4 vorgesehen ist, wobei der Positionierabschnitt 58 der Zunge 52 an den Anschlagabschnitt 59 des Endgliedes 4 anschlägt, ferner einen Lagerabschnitt 60, der an dem Endglied 4 vorgesehen ist, wobei der Stützabschnitt 57 der Zunge 52 an dem Lagerabschnitt 60 des Endgliedes 4 abgestützt ist. Vorliegend sind die Stützabschnitte 57 mittelbar über Quetschrippen 61 an dem Lagerabschnitt 60 des Endgliedes 4 abgestützt. Die Quetschrippen 61 sind vorliegend einstückig an das Endglied 4 angeformt. Die Quetschrippen 61 sind keilförmig ausgebildet, so dass während des Einschiebens der Zungen 52 diese zunehmend eingekeilt werden zwischen den Positionierabschnitten 58 des Endgliedes 4 und den Quetschrippen 61.

Der Abstand zwischen den Positionierabschnitten 58 der Zunge 52 und der Zungenfläche 53 einerseits und der Abstand zwischen den Anschlagabschnitten 59 des Endgliedes 4 und der Endgliedfläche 32 des Endgliedes 4 andererseits ist derart aufeinander abgestimmt, dass die Endgliedfläche 32 und die Zungenfläche 53 in einer gemeinsamen Ebene liegen. Somit ist sichergestellt, dass die Seitenflächen 22, 23, 54 des Umlenkkanals 11 in einer gemeinsamen Ebene liegen. Die Rollen 7 können nicht verkanten oder verhaken, sondern laufen vielmehr einwandfrei im Umlenkkanal 11 um. Bei der Herstellung der Seitenflächen 22, 23, 54 brauchen lediglich die oben erwähnten Abstände einwandfrei eingehalten zu werden. Toleranzschwankungen an anderen Stellen des Endgliedes 4 oder des Rückhaltesteges 25 haben keinen Einfluss auf die Lage der Zungenfläche 53 und der Endgliedfläche 32 zueinander.

### Positionszahlenliste

- 1: Führungswagen
- 2: Führungsschiene
- 3: Tragkörper
- 4: Endglied
- 5: Führungsschenkel
- 6: Verbindungssteg
- 7: Rolle
- 8: Rollenkanal
- 9: Tragkanal
- 10: Rücklaufkanal
- 11: Umlenkkanal
- 12: Laufbahn
- 13: Laufbahn
- 14: Laufbahn
- 15: Laufbahn
- 16: Laufbahn
- 17: Laufbahn
- 18: Seitenfläche
- 19: Seitenfläche
- 20: Seitenfläche
- 21: Seitenfläche
- 22: Seitenfläche
- 23: Seitenfläche
- 24: Rückhaltesteg
- 25: Rückhaltesteg
- 26: Rückhaltesteg
- 27: Rücklaufrohr
- 28: Durchgangsbohrung
- 29: Kopfstück
- 30: Umlenkschale
- 31: Seitenteil
- 32: Endgliedfläche
- 33: Zunge
- 34: Zungenfläche
- 35: Öffnung
- 36: Aufnahme
- 37: Trennfuge
- 38: Positioniereinrichtung
- 39: Stückabschnitt
- 40: Positionierabschnitt
- 41: Anschlagabschnitt
- 42: Lagerabschnitt
- 43: Quetschrippe
- 44: Längsteil
- 45: Hohlraum
- 46: Ausnehmung
- 47: Teilungsseite
- 48: Steg
- 49: Steckverbindung
- 50: Teilzapfen
- 51: Zapfen
- 52: Zungen
- 53: Zungenfläche
- 54: Seitenfläche
- 55: Trennfuge
- 56: Positioniereinrichtung
- 57: Stützabschnitt
- 58: Positionierabschnitt
- 59: Anschlagabschnitt
- 60: Lagerabschnitt
- 61: Quetschrippe

## Patentansprüche

1. Linearwälzlager mit einem an einer Führungsschiene (2) über Rollen (7) wälzlagerbaren Führungswagen (1), der mit wenigstens einem endlosen Rollenkanal (8) für die Rollen (7) versehen ist, welcher Rollenkanal (8) einen Tragkanal (9) für tragende Rollen (7), einen Rücklaufkanal (10) für rücklaufende Rollen (7) und zwei den Tragkanal (9) und den Rücklaufkanal (10) miteinander verbindende Umlenkkanäle (11) aufweist, wobei der Führungswagen (1) einen den Rücklaufkanal (10) und den Tragkanal (9) aufweisenden Tragkörper (3) und an beiden Stirnseiten des Tragkörpers (3) angeordnete, die Umlenkkanäle (11) aufweisende Endglieder (4) umfaßt, und wobei der Rücklaufkanal (10) ein Rücklaufrohr (27) umfaßt, dessen Rohrenden mit den Endgliedern (4) verbunden sind, und wobei der Rollenkanal (8) Laufbahnen für die Rollen und Seitenflächen zur seitlichen Begrenzung des Rollenkanals aufweist, **dadurch gekennzeichnet, daß** das Rücklaufrohr (27) mit Zungen (33) versehen ist, die in das Endglied (4) eingreifen und mit einander zugewandten Zungenflächen (34) Seitenflächen (22) des Umlenkkanals (11) bilden, wobei eine Trennfuge (37) zwischen jeder Zunge (33)und dem Endglied (4) zumindest im Wesentlichen parallel zu dem Rücklaufrohr (27) angeordnet ist.

2. Linearwälzlager nach Anspruch 1, bei dem das Endglied (4) mit einer konkav gekrümmten äußeren Laufbahn (15) für die Rollen (7) versehen ist, wobei die Zungen (33) eine Ebene durchstoßen, in der die konkav gekrümmte äußere Laufbahn (15) liegt.

3. Linearwälzlager nach Anspruch 1, bei dem das Endglied (4) mit Aufnahmen (36) für die Zungen (33) versehen ist.

4. Linearwälzlager nach Anspruch 1, bei dem das Endglied (4) mit Seitenteilen (31) versehen ist, deren einander zugewandte Endgliedflächen (32) gemeinsam mit den einander zugewandten Zungenflächen (34) die Seitenflächen (22) des Umlenkkanals (11) bilden, wobei zwischen den Seitenteilen (31) eine konkav gekrümmte äußere Laufbahn (15) des Umlenkkanals (11) angeordnet ist.

5. Linearwälzlager nach Anspruch 4, bei dem die Trennfuge (37) von der Zunge (33) und dem Seitenteil (31) begrenzt ist.

6. Linearwälzlager nach Anspruch 4, bei dem das Endglied (4) ein an dem Tragkörper (3) gehaltenes Kopfstück (29) und eine in dem Kopfstück (29) angeordnete Umlenkschale (30) umfaßt, wobei die Umlenkschale (30) die konkav gekrümmte äußere Laufbahn (15) aufweist.

7. Linearwälzlager nach Anspruch 6, bei dem die Umlenkschale (30) mit den Seitenteilen (31) versehen ist, wobei die Seitenteile (31) mit die Aufnahmen (36) für die Zungen (33) bildenden Öffnungen (35) versehen sind.

8. Linearwälzlager nach Anspruch 4, bei dem mittels einer Positioniereinrichtung (38) die Zungen (33) mit ihren einander zugewandten Zungenflächen (34) in einer gemeinsamen Ebene mit den einander zugewandten Endgliedflächen (32) gehalten sind.

## Claims

1. Linear roller bearing having a guide carriage (1) which can be mounted via rollers (7) on a guide rail (2) and is provided with at least one endless roller channel (8) for the rollers (7), which roller channel (8) has a loadbearing channel (9) for loadbearing rollers (7), a return channel (10) for returning rollers (7) and two deflection channels (11) which connect the loadbearing channel (9) and the return channel (10) to one another, the guide carriage (1) comprising a loadbearing body (3) which has the return channel (10) and the loadbearing channel (9), and comprising end elements (4) which are arranged at both end sides of the loadbearing body (3) and have the deflection channels (11), and the return channel (10) comprising a return tube (27), the tube ends of which are connected to the end elements (4), and the roller channel (8) having raceways for the rollers and side faces for the lateral delimitation of the roller channel, **characterized in that** the return tube (27) is provided with tongues (33) which engage into the end element (4) and, with mutually facing tongue faces (34), form side faces (22) of the deflection channel (11), a joint (37) between every tongue (33) and the end element (4) being arranged at least substantially parallel to the return tube (27).

2. Linear roller bearing according to Claim 1, in which the end element (4) is provided with a concavely curved outer raceway (15) for the rollers (7), the tongues (33) penetrating a plane, in which the concavely curved outer raceway (15) lies.

3. Linear roller bearing according to Claim 1, in which the end element (4) is provided with receptacles (36) for the tongues (33).

4. Linear roller bearing according to Claim 1, in which the end element (4) is provided with side parts (31), the mutually facing end-element faces (32) of which form the side faces (22) of the deflection channel (11) together with the mutually facing tongue faces (34), a concavely curved outer raceway (15) of the deflection channel (11) being arranged between the side parts (31).

5. Linear roller bearing according to Claim 4, in which the joint (37) is delimited by the tongue (33) and the side part (31).

6. Linear roller bearing according to Claim 4, in which the end element (4) comprises a head piece (29) which is held on the loadbearing body (3) and a deflection shell (30) which is arranged in the head piece (29), the deflection shell (30) having the concavely curved outer raceway (15).

7. Linear roller bearing according to Claim 6, in which the deflection shell (30) is provided with the side parts (31), the side parts (31) being provided with openings (35) which form the receptacles (36) for the tongues (33).

8. Linear roller bearing according to Claim 4, in which, by means of a positioning device (38), the tongues (33) are held with their mutually facing tongue faces (34) in a common plane with the mutually facing end-element faces (32).

## Revendications

1. Palier à roulement linéaire comportant un chariot de guidage (1) pouvant être monté sur palier à roulement sur un rail de guidage (2) par l'intermédiaire de rouleaux (7), lequel chariot de guidage (1) est pourvu d'au moins un canal de roulement (8) sans fin destiné aux rouleaux (7), lequel canal de roulement (8) présente un canal porteur (9) pour des rouleaux porteurs (7), un canal de retour (10) pour des rouleaux de retour (7) et deux canaux de renvoi (11) reliant le canal porteur (9) et le canal de retour (10) l'un à l'autre, le chariot de guidage (1) comportant un corps porteur (3) présentant le canal porteur (9) et le canal de retour (10) et des éléments d'extrémité (4) présentant les canaux de renvoi (11) disposés des deux côtés frontaux du corps porteur (3), et le canal de retour (10) comportant un conduit de retour (27), dont les extrémités de conduit sont reliées aux éléments d'extrémité (4), et le canal de roulement (8) présentant des voies de roulement destinées aux rouleaux et des surfaces latérales destinées à délimiter latéralement le canal de roulement (8), **caractérisé en ce que** le conduit de retour (27) est pourvu de langues (33), lesquelles s'engagent dans l'élément d'extrémité (4) et forment avec des surfaces (34) de langues tournées l'une vers l'autre des surfaces latérales (22) du canal de renvoi (11), une fente de séparation (37) étant disposée entre chaque langue (33) et l'élément d'extrémité (4) au moins substantiellement de façon parallèle au conduit de retour (27).

2. Palier à roulement linéaire selon la revendication 1, dans lequel l'élément d'extrémité (4) est pourvu d'une voie de roulement extérieure (15) courbée de façon concave destinée aux rouleaux (7), les langues (33) passant par un plan dans lequel se trouve la voie de roulement extérieure (15) courbée de façon concave.

3. Palier à roulement linéaire selon la revendication 1, dans lequel l'élément d'extrémité (4) est pourvu de logements (36) destinés aux langues (33).

4. Palier à roulement linéaire selon la revendication 1, dans lequel l'élément d'extrémité (4) est pourvu de parties latérales (31), dont les surfaces (32) d'élément d'extrémité tournées l'une vers l'autre forment conjointement avec les surfaces (34) de langues tournées l'une vers l'autre les surfaces latérales (22) du canal de renvoi (11), une voie de roulement extérieure (15) courbée de façon concave du canal de renvoi (11) étant disposée entre les parties latérales (31) :

5. Palier à roulement linéaire selon la revendication 4, dans lequel la fente de séparation (37) de la langue (33) et de la partie latérale (31) est limitée.

6. Palier à roulement linéaire selon la revendication 4, dans lequel l'élément d'extrémité (4) comporte une pièce de tête (29) maintenue au corps porteur (3) et une coquille de renvoi (30) disposée dans la pièce de tête (29), la coquille de renvoi (30) présentant la voie de roulement extérieure (15) courbée de façon concave.

7. Palier à roulement linéaire selon la revendication 6, dans lequel la coquille de renvoi (30) est pourvue des parties latérales (31), les parties latérales (31) étant pourvues d'ouvertures (35) formant les logements (36) destinés aux langues (33).

8. Palier à roulement linéaire selon la revendication 4, dans lequel les langues (33) sont maintenues avec leurs surfaces (34) de langues tournées l'une vers l'autre dans un plan commun avec les surfaces (32) d'élément d'extrémité tournées l'une vers l'autre, au moyen d'un dispositif de positionnement (38).
